Europäisches Patentamt

European Patent Office (11) Numéro de publication : **0 013 531**

Office européen des brevets **B1**

.(12)                        **FASCICULE DE BREVET EUROPÉEN**

(45) Date de publication du fascicule du brevet :         (51) Int. Cl.³ : **B 65 G 13/07**
09.03.83

(21) Numéro de dépôt : **79420060.0**

(22) Date de dépôt : **27.11.79**

(54) **Table à rouleaux pour manutention.**

(30) Priorité : **28.12.78 FR 7837091**

(43) Date de publication de la demande :
**23.07.80 Bulletin 80/15**

(45) Mention de la délivrance du brevet :
**09.03.83 Bulletin 83/10**

(84) Etats contractants désignés :
**AT BE CH DE GB IT LU NL SE**

(56) Documents cités :
**FR A 2 354 264**
**GB A 697 901**
**GB A 1 138 682**
**GB A 1 149 315**
**SU A 174 107**
**US A 1 975 927**

(73) Titulaire : **T 2 I TECHNOLOGIE INNOVATIONS INDUS-
TRIELLES Société à responsabilité limitée dite:
Trevignin
F-73100 Aix les Bains (FR)**

(72) Inventeur : **Jean, André
Trevignin Savoie (FR)**
Inventeur : **Parmeland, Michel
Bloye Haute-Savoie (FR)**

(74) Mandataire : **Maureau, Bernard et al
Cabinet GERMAIN & MAUREAU Le Britannia - Tour C
20, Boulevard Eugène Déruelle
F-69003 Lyon (FR)**

Jouve, 18, rue St-Denis, 75001 Paris, France

Table à rouleaux pour manutention

L'invention a pour objet une table à rouleaux pour manutention de produits et d'objets divers.

Dans les tables à rouleaux les plus courantes, l'entraînement des rouleaux cylindriques servant de chemins de déplacement aux produits ou aux objets à manutentionner est réalisé au moyen d'une ou de deux chaînes qui sont généralement placées latéralement par rapport à la table. La ou les chaînes, qui engrènent avec des pignons calés sur les arbres porteurs des rouleaux, permettent de réaliser un entraînement impératif, mais ce mode d'entraînement présente divers inconvénients inhérents aux chaînes. Les entraînements par chaînes sont en effet onéreux, dangereux, bruyants et sujets à usure ; leur montage est en outre difficile et ils nécessitent un entretien important.

Il existe certes un autre type de table qui est décrit dans le brevet GB. A. 1 149 315 et dans lequel les rouleaux sont écartés les uns des autres et sont entraînés par une courroie sans fin agissant alternativement, de façon directe, sur un rouleau et, de façon indirecte sur le rouleau voisin grâce à un autre rouleau avec lequel ce rouleau voisin est en contact tangentiel et sur lequel agit la courroie. Ce type de table ne permet pas un entraînement suffisamment positif pour garantir un bon acheminement des produits ou objets à transporter ; et il conduit à un tel écartement des rouleaux que la table ne convient pas à la manutention de n'importe quels produits ou objets.

L'invention écarte ces inconvénients. Elle a pour objet une table à rouleaux qui est de ce dernier type, mais dans laquelle les rouleaux alternent avec des galets avec lesquels ils sont maintenus en contact direct ou indirect par l'intermédiaire de l'élément moteur sans fin en des zones tangentielles par l'élément moteur sans fin qui prend appui alternativement sur un rouleau et sur un galet en les enveloppant partiellement du fait que, ou les rouleaux seuls, ou les galets seuls sont portés par des arbres. Chaque galet tend ainsi à prendre appui contre les deux rouleaux entre lesquels il est placé et oblige la courroie ou autre élément moteur sans fin à entraîner efficacement les rouleaux, car l'angle de l'arc de cercle suivant lequel cet élément prend appui sur chaque rouleau est suffisant.

Dans le premier cas, des gorges périphériques sont aménagées sur les rouleaux et sur les galets. La courroie sans fin passe dans ces gorges, et chaque galet est ainsi en contact avec deux rouleaux suivant deux génératrices.

Dans le deuxième cas, la courroie est en appui sur la surface des rouleaux et des galets et chaque galet est ainsi en contact avec deux rouleaux par l'intermédiaire de la courroie.

Dans tous les cas, l'entraînement des rouleaux peut se faire soit latéralement à l'une et/ou à l'autre de leurs deux extrémités, soit dans leur partie médiane ; et lorsque l'entraînement est latéral aux deux extrémités des rouleaux, chaque galet associé à deux rouleaux peut consister lui-même en un rouleau dont les deux extrémités jouent le rôle de deux galets.

Il est fréquent que les tables à rouleaux présentent, non seulement des zones rectilignes, mais aussi des zones courbes pour permettre un changement de direction aux produits ou aux objets manutentionnés. Une table conforme à l'invention satisfait cette condition. Dans les zones rectilignes, les galets et les zones correspondantes des rouleaux sont cylindriques ; et dans les zones courbes, les galets et les zones correspondantes des rouleaux sont tronconiques.

L'invention sera bien comprise d'ailleurs, et ses avantages ainsi que d'autres caractéristiques ressortiront de la description qui suit, en référence au dessin schématique annexé représentant, à titre d'exemple non limitatif, une forme d'exécution du mécanisme de cette table à rouleaux :

Figure 1 est une vue en perspective qui en montre le principe ;

Figure 2 est, à plus grande échelle, une vue en coupe verticale montrant deux rouleaux, un galet et la courroie d'entraînement ;

Figure 3 est une vue en perspective d'une variante d'exécution du système représenté à la figure 1, et

Figure 4 montre, en perspective, un système conforme à l'invention, dans le cas où il est destiné à permettre l'entraînement de rouleaux cylindriques dans les portions curvilignes d'une table à rouleaux.

Comme cela est connu en soi, la table destinée à la manutention d'objets ou de produits divers est constituée par une pluralité de rouleaux (1), de forme générale cylindrique, qui sont tous disposés parallèlement les uns aux autres dans les zones rectilignes de la table, mais sont disposés suivant des axes concourants lorsqu'il s'agit de zones curvilignes destinées à changer la direction dans laquelle les produits ou objets sont manutentionnés.

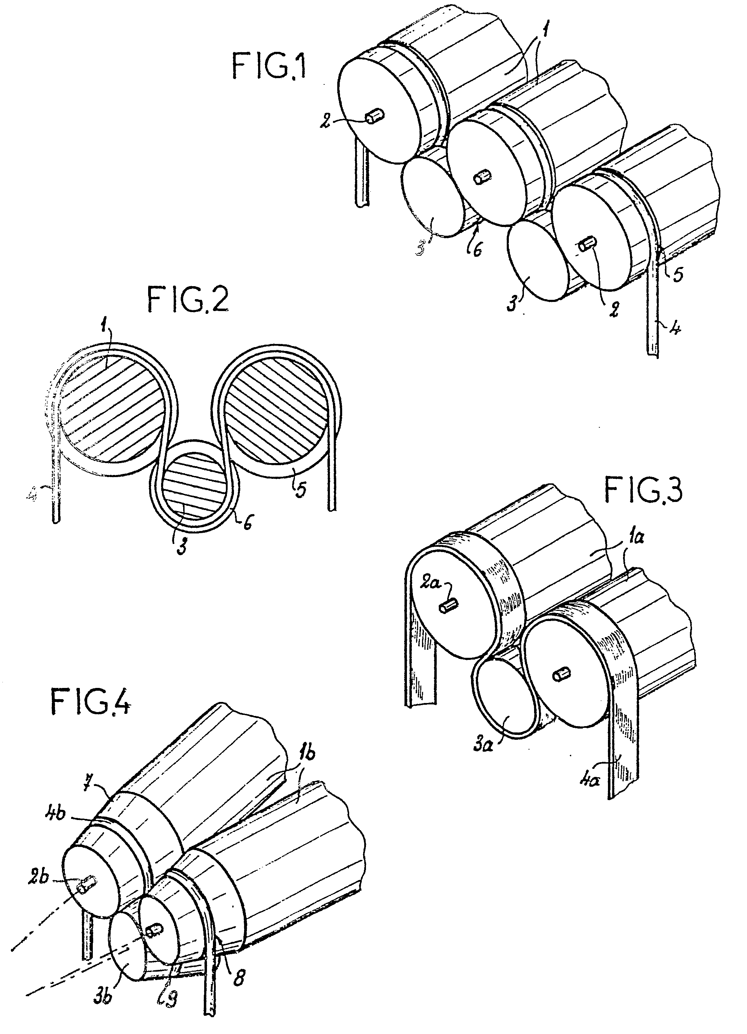

Considérant les figures 1 à 3, il s'agit de rouleaux cylindriques (1) dont les axes sont parallèles, car ils sont destinés à constituer des zones de manutention dont la direction de translation est rectiligne. Chaque rouleau (1) est monté fou sur un arbre (2) porté par des paliers, non représentés au dessin ; et l'écartement des rouleaux (1) est suffisant pour permettre à des galets (3), de forme également cylindrique, d'être mis en place entre deux rouleaux voisins (1). Pour la commodité de la table, ces galets sont situés en dessous des axes 2 des rouleaux (1) ; et ils présentent pour particularité de n'être portés ni par des axes, ni par des supports quelconques. Ils sont en effet associés à un élément sans fin moteur, à savoir une courroie d'entraînement (4), qui a pour rôle de donner un mouvement de rotation aux rouleaux (1) tout en supportant les galets (3) et en appliquant ces galets contre la périphérie des rouleaux (1), ce qui a pour effet d'assurer finalement un excellent entraînement en rotation des rouleaux (1).

Il est d'ailleurs à noter qu'une solution inverse de celle précédente peut être adoptée, tout en procurant le même résultat. Dans cette solution inverse, ce sont les galets (3) qui tourillonnent sur des arbres identiques à ceux (2), et les rouleaux (1) reposent alors sur les galets (3) et sont maintenus en appui sur eux par la courroie d'entraînement (4).

Dans l'une ou l'autre des deux solutions précitées, l'entraînement de l'ensemble des rouleaux (1) et des galets (3) peut être fait en une seule ou en deux zones. C'est ainsi que peut être placée une seule courroie (4) coopérant avec l'une seule des deux zones latérales ou avec la zone médiane des rouleaux et galets ; mais c'est ainsi encore que peuvent être placées deux courroies (4) coopérant avec les deux zones latérales des rouleaux et galets.

Dans le cas représenté aux figures 1 et 2, les rouleaux (1) et les galets (3) présentent une gorge périphérique, respectivement (5) et (6), au fond de laquelle prend appui la courroie (4) dont la face extérieure se trouve en retrait par rapport à la face externe des rouleaux (1) et des galets (3). Ainsi, lorsque la courroie motrice (4) est tendue, les galets (3) sont appliqués par la courroie (4) contre les rouleaux (1) ; et le déplacement de translation de la courroie (4) entraîne impérativement la rotation de l'ensemble des rouleaux (1) et des galets (3). Cet entraînement est positif et sans risque de glissement car la longueur de l'arc de cercle sur lequel la courroie prend appui sur chaque rouleau (1) est suffisante. Cela ressort bien de la figure 2.

Il est cependant à remarquer que le contact direct des galets (3) avec les rouleaux (1), tel qu'il est représenté aux figures 1 et 2, n'est pas impératif. La figure 3 montre en effet une variante d'exécution dans laquelle deux rouleaux (1a) coopèrent avec un galet (3a) sans que des gorges aient été prévues dans les rouleaux et dans le galet pour permettre le passage de la courroie. Dans ce cas, le contact entre rouleaux et galet se fait par l'intermédiaire de la courroie (4a), qui présente avantageusement une grande largeur, comme le montre la figure 3. Pour éviter à cette courroie de se déplacer latéralement au cours du mouvement d'entraînement en rotation des rouleaux (1a), et des galets (3a), des dispositifs de guidage latéral, non représentés au dessin, peuvent être prévus.

Les figures 1 à 3 représentent donc le système d'entraînement lorsqu'il s'agit de zones dans lesquelles les produits ou objets à manutentionner doivent être déplacés de façon rectiligne.

Lorsqu'il s'agit par contre de zones dans lesquelles le déplacement de translation doit se faire de façon curviligne, l'agencement peut être celui représenté à la figure 4, dans laquelle (1b) désigne des rouleaux cylindriques dont les axes (2b) sont, non pas parallèles, mais concourants en un point, et ces rouleaux (1b) comportent alors, à leur extrémité située en direction de ce point, une tête (7) de forme générale tronconique dans laquelle est aménagée une gorge (8). Ces têtes tronconiques (7) sont destinées à coopérer avec un galet (3b), de forme également tronconique, dans lequel est aménagée une gorge (9) permettant, comme celle (8), le passage d'une courroie (4b) qui contourne partiellement les têtes tronconiques (7) des cylindres (1b) et les galets tronconiques (3b).

Des moyens sont bien entendu prévus pour permettre aux rouleaux cylindriques (1b) des zones curvilignes de tourner à la même vitesse que les rouleaux cylindriques (1) des zones rectilignes. Des moyens peuvent en outre être prévus pour permettre aux rouleaux cylindriques (1), situés à l'extrémité aval d'une zone curviligne, d'entraîner en rotation le rouleau cylindrique (1b) situé en amont dans la zone curviligne faisant suite à cette zone rectiligne.

Quels que soient les moyens utilisés pour entraîner simultanément ou séparément les diverses zones rectilignes et curvilignes de l'installation, il est possible de prévoir un démarrage et un arrêt progressifs des rouleaux constituant la table de manutention. Ce résultat est obtenu par exemple en prévoyant un embrayage ou un système quelconque à friction entre la courroie et le tambour ou la poulie qui lui impose son mouvement de déplacement.

Comme il va de soi, l'invention ne se limite pas aux seules formes d'exécution de cette table à rouleaux qui ont été ci-dessus décrites à titre d'exemple ; elle en embrasse au contraire toutes les variantes de réalisation dans le cadre défini par les revendications.

## Revendications

1. Table à rouleaux pour manutention, du type de celles dans lesquelles des rouleaux cylindriques (1) sont écartés les uns des autres et sont entraînés en rotation par un élément moteur sans fin (4) tel qu'une courroie, caractérisée en ce que ces rouleaux (1) alternent avec des galets (3) avec lesquels ils sont maintenus en contact direct ou indirect par l'intermédiaire de l'élément moteur sans fin en des zones tangentielles par cet élément moteur sans fin qui prend appui alternativement sur un rouleau (1) et sur un galet (3) en les enveloppant partiellement du fait que, ou les rouleaux seuls, ou les galets seuls sont portés par des arbres (2).

2. Table à rouleaux selon la revendication 1, caractérisée en ce que des gorges périphériques (5, 6) sont aménagées sur les rouleaux (1) et sur les galets (3), la courroie sans fin (4) passe dans ces gorges et chaque galet (3) est ainsi en contact avec deux rouleaux (1) suivant deux génératrices.

3. Table à rouleaux selon la revendication 1, caractérisée en ce que la courroie (4) est en appui sur la surface des rouleaux (1) et des galets (3), et chaque galet (3) est ainsi en contact indirect avec deux rouleaux (1) par l'intermédiaire de la courroie (4).

4. Table à rouleaux selon les revendications 1 à 3, caractérisée en ce que l'entraînement des rouleaux (1) et des galets (3) par une courroie (4) se fait à l'une seule des extrémités latérales de l'installation.

5. Table à rouleaux selon les revendications 1 à 3, caractérisée en ce que l'entraînement des rouleaux (1) et des galets (3) se fait aux deux extrémités latérales de la machine par deux courroies indépendantes recevant éventuellement leur mouvement d'un même élément moteur.

6. Table à rouleaux selon les revendications 1 à 3, caractérisée en ce que l'entraînement des rouleaux (1) et des galets (3) se fait par une courroie placée dans la partie médiane longitudinale de l'installation.

7. Table à rouleaux selon l'une quelconque des revendications 1 à 6, caractérisée en ce que dans les zones à déplacement rectiligne, les zones motrices des rouleaux (1) et des galets correspondants (3) ont une forme cylindrique.

8. Table à rouleaux selon l'une quelconque des revendications 1 à 6, caractérisée en ce que dans les zones à déplacement curviligne, les zones motrices (7) des rouleaux (1b) ou les rouleaux eux-mêmes et les galets (3b) ont une forme tronconique.

9. Table à rouleaux selon l'une quelconque des revendications 1 à 8, caractérisée en ce que les rouleaux (1) sont portés par les arbres (2) autour desquels ils sont montés libres en rotation et les galets (3) sont supportés exclusivement par l'élément moteur sans fin (4) qui les maintient en appui contre les rouleaux (1).

10. Table à rouleaux selon l'une quelconque des revendications 1 à 8, caractérisée en ce que les galets (3) sont portés par les arbres autour desquels ils sont montés libres en rotation, et les rouleaux (1) sans support intermédiaire reposent sur les galets (3) et sont maintenus en appui sur eux par l'élément moteur sans fin (4).

**Claims**

1. Roller table for handling goods and of the type in which cylindrical rollers (1) are spaced apart from one another and are rotatably driven by an endless drive element (4) such as a belt, characterised in that these rollers (1) alternate with wheels (3) with which they are maintained in direct or indirect contact in tangential zones by means of the endless drive element which bears alternately on a roller (1) and on a wheel (3) bypassing partially around said roller or wheel, by reason of the fact that either the rollers only or the wheels only are mounted on spindles (2).

2. Roller table according to Claim 1, characterised in that peripheral grooves (5, 6) are provided on the rollers (1) and on the wheels (3) and in that the endless belt (4) passes through these grooves and each wheel (3) is thus in contact with two rollers (1) along two generatrices.

3. Roller table according to Claim 1, characterised in that the belt (4) bears on the surface of the rollers (1) and of the wheels (3) and in that each wheel (3) is thus in indirect contact with two rollers (1) by means of the belt (4).

4. Roller table according to Claims 1 to 3, characterised in that driving of the rollers (1) and of the wheels (3) by a belt (4) is carried out at only one of the lateral ends of the installation.

5. Roller table according to Claims 1 to 3, characterised in that driving of the rollers (1) and of the wheels (3) is carried out at both lateral ends of the machine, via two independent belts which may possibly be driven by the same drive means.

6. Roller table according to Claims 1 to 3, characterised in that driving of the rollers (1) and of the wheels (3) is carried out by a belt located in the longitudinal median part of the installation.

7. Roller table according to any one of Claims 1 to 6, characterised in that in the zones of rectilinear displacement, the driving zones of the rollers (1) and of the corresponding wheels (3) are of cylindrical form.

8. Roller table according to any one of Claims 1 to 6, characterised in that in the zones of curvilinear displacement, the driving zones (7) of the rollers (1b) or the rollers themselves and the wheels (3b) are of frustoconical form.

9. Roller table according to any one of Claims 1 to 8, characterised in that the rollers (1) are carried by the spindles (2) on which they are mounted for free rotation while the wheels (3) are supported solely by the endless drive element (4) which maintains them in firm contact with the rollers (1).

10. Roller table according to any one of Claims 1 to 8, characterised in that the wheels (3) are carried by the spindles on which they are mounted for free rotation, while the rollers (1) which have no intermediate support rest on the wheels (3) and are maintained in firm contact with them by the endless drive element (4).

**Ansprüche**

1. Rollgang für die Handhabung von Waren, mit zylindrischen Walzen (1), die im Abstand voneinander angeordnet und durch ein endloses Antriebselement (4), z. B. einen Riemen, mit einer Drehbewegung beaufschlagbar sind, dadurch gekennzeichnet, daß die Walzen (1) mit Rollen (3) abwechseln und mit diesen in tangentiellen Zonen durch das endlose Antriebselement (4) in direkter oder unter Zwischenfügung des endlosen Antriebselementes (84) indirekter Berührung gehalten sind, wobei das endlose Antriebselement (4) sich abwechselnd an einer Walze (1) und an einer Rolle (3) abstützt, indem es diese teilweise umschlingt, und daß entweder nur die Walzen (1) oder nur die Rollen (3) von Wellen (2) getragen sind.

2. Rollgang nach Anspruch 1, dadurch gekennzeichnet, daß an den Walzen (1) und an den Rollen (3) periphere Nuten (5, 6) angebracht sind, daß der endlose Riemen (4) in diesen Nuten verläuft und daß jede Rolle (3) somit mit zwei Walzen (1) längs zweier Mantellinien in Berührung steht.

3. Rollgang nach Anspruch 1, dadurch gekennzeichnet, daß der Riemen (4) sich an der Oberfläche der Walzen (1) und der Rollen (3) abstützt und daß jede Rolle (3) somit unter Zwischenfügung des Riemens (4) mit zwei Walzen (1) in indirekter Berührung steht.

4. Rollgang nach Anspruch 1 bis 3, dadurch gekennzeichnet, daß der Antrieb der Walzen (1) und der Rollen (3) durch einen Riemen (4) in nur einem der seitlichen Endbereiche der Vorrichtung stattfindet.

5. Rollgang nach einem der Ansprüche 1 bis 3, dadurch gekennzeichnet, daß der Antrieb der Walzen (1) und der Rollen (3) in beiden seitlichen Endbereichen der Maschine mittels zweier unabhängiger, gegebenenfalls von ein und demselben Antriebselement bewegter Riemen stattfindet.

6. Rollgang nach einem der Ansprüche 1 bis 3, dadurch gekennzeichnet, daß der Antrieb der Walzen (1) und der Rollen (3) durch einen im mittleren Längsbereich der Vorrichtung angeordneten Riemen stattfindet.

7. Rollgang nach einem der Ansprüche 1 bis 6, dadurch gekennzeichnet, daß die Antriebszonen der Walzen (1) und der entsprechenden Rollen (3) in den Zonen geradliniger Verschiebung zylindrische Form besitzen.

8. Rollgang nach einem der Ansprüche 1 bis 6, dadurch gekennzeichnet, daß die Antriebszonen (7) der Walzen (1b) oder die Walzen selbst und die Rollen (3b) in den Zonen mit längs einer Kurve verlaufender Verschiebung Kegelstumfform haben.

9. Rollgang nach einem der Ansprüche 1 bis 8, dadurch gekennzeichnet, daß die Walzen (1) von den Wellen (2) getragen und freilaufend an diesen montiert sind und daß die Rollen (3) ausschließlich von dem endlosen Antriebselement (4) getragen sind und von diesem gegen die Walzen (1) gehalten sind.

10. Rollgang nach einem der Ansprüche 1 bis 8, dadurch gekennzeichnet, daß die Rollen (3) von den Wellen getragen und an diesen freilaufend montiert sind und daß die Walzen (1) ohne Zwischenlagerung auf den Rollen (3) ruhen und von dem endlosen Antriebselement (4) gegen diese gehalten sind.

0 013 531

FIG.1

FIG.2

FIG.3

FIG.4